# EUROPEAN PATENT APPLICATION

(11) **EP 4 679 892 A1**
(43) Date of publication of application: **14.01.2026**
(21) Application number: 24767348.6
(22) Date of filing: 29.02.2024
(51) Int. Cl.: H04W 36/18, H04W 36/08, H04W 36/00, H04W 76/15, H04W 84/12

(54) **METHOD AND APPARATUS FOR MULTI-LINK DEVICE-BASED ROAMING IN WIRELESS LAN SYSTEM**

(30) Priority: 08.03.2023 KR 20230030785
(71) Applicant: LG Electronics Inc., Seoul 07336 (KR)
(72) Inventor: JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR)
(74) Representative: Frenkel, Matthias Alexander
(86) International application number: PCT/KR2024/002641
(87) International publication number: WO 2024/186059

(57) **Abstract**

A method and apparatus for multi-link device (MLD)-based roaming in a wireless LAN system are disclosed. The method performed by a first STA in a wireless LAN system comprises the steps of: receiving, from a first access point (AP) belonging to a first group, announcement information including first information related to whether or not an addition of at least one link is supported for the first STA; transmitting, to the first AP, a request frame including a link ID of a second AP belonging to a second group; and receiving, from the first AP, a response frame including the link ID of the second AP, wherein the request frame may include second information requesting an addition or deletion of a link between the first STA and the second AP.

## Description

### [TECHNICAL FIELD]

The present disclosure relates to a roaming method and device based on a multi-link device (MLD) in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.1 1ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for roaming based on a multi-link device (MLD) in a wireless LAN system.

An additional technical problem of the present disclosure is to provide a method and device for supporting or performing roaming of a station (STA) between different access points (APs) affiliated with a common MLD in a wireless LAN system.

An additional technical problem of the present disclosure is to provide a method and device for performing communication by adding/deleting temporary links during an MLD-based roaming procedure in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to one aspect of the present disclosure may include receiving, from a first access point (AP) affiliated with a first group, announcement information including first information related to whether addition of at least one link is supported for the first STA; transmitting, to the first AP, a request frame including an link ID of a second AP affiliated with a second group; and receiving, from the first AP, a response frame including the link ID of the second AP, and the request frame may include second information requesting addition or deletion of a link between the first STA and the second AP.

A method performed by a first access point (AP) included in a first group in a wireless LAN system according to another aspect of the present disclosure may include transmitting, to a first station (STA), announcement information including first information regarding whether an addition of at least one link is supported for the first STA; receiving, from the first STA, a request frame including a link ID of a second AP affiliated with a second group; and transmitting, to the first STA, a response frame including the link ID of the second AP, and the request frame may include second information requesting addition or deletion of a link between the first STA and the second AP.

### [Technical Effects]

According to the present disclosure, a method and device for roaming based on a multi-link device (MLD) in a wireless LAN system may be provided.

According to the present disclosure, a method and device for supporting or performing roaming of a station (STA) between different access points (APs) affiliated with a common MLD in a wireless LAN system may be provided.

According to the present disclosure, an additional technical problem of the present disclosure is a method and device for performing communication by adding/deleting a temporary link while performing an MLD-based roaming procedure in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary structure of an ML element to which the present disclosure may be applied.
FIG. 9 is a diagram illustrating an example of a high-level structure for an AP MLD to which the present disclosure may be applied.
FIG. 10 is a diagram illustrating BSS transition in a conventional wireless LAN system.
FIG. 11 is a diagram illustrating an example of a method for performing MLD-based roaming by an STA according to the present disclosure.
FIG. 12 is a diagram illustrating an example of a method for an AP to support MLD-based roaming by an STA according to the present disclosure.
FIG. 13 is a diagram illustrating an example of the structure and procedure of MLD-based roaming according to the present disclosure.
FIG. 14 is a diagram illustrating an example of an element including announcement information according to the present disclosure.
FIG. 15, FIG. 16, and FIG. 17 are diagrams illustrating an example of a reconfiguration ML element according to the present disclosure.
FIG. 18 is a diagram illustrating an example of the structure and procedure of MLD-based roaming according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.1 1be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

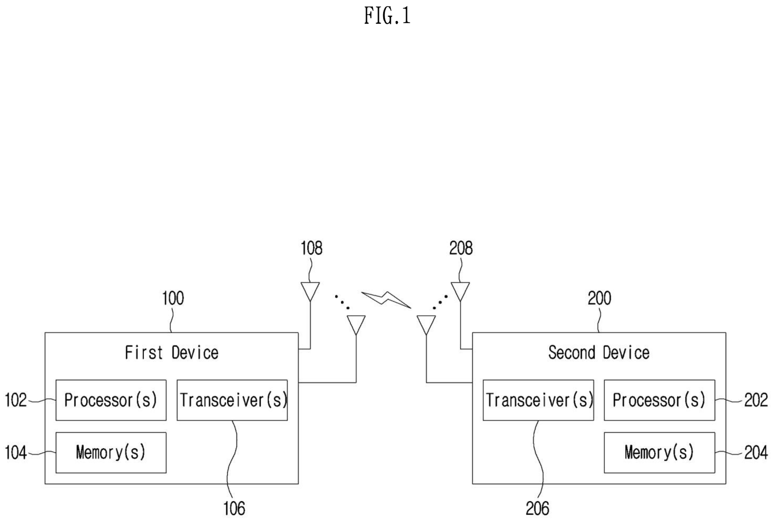

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

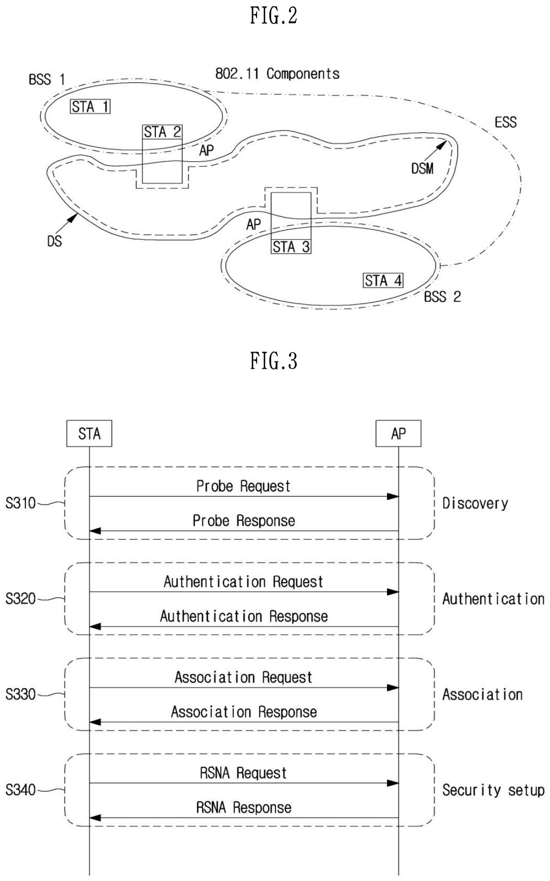

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

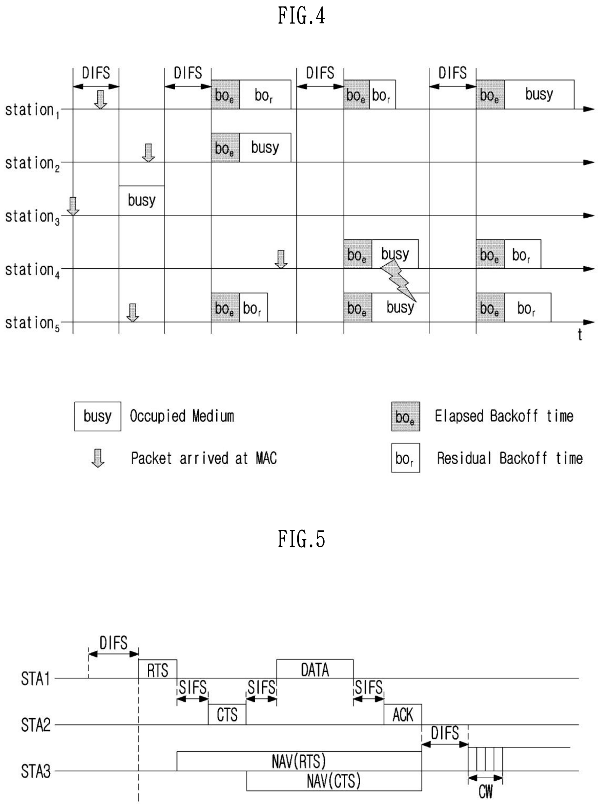

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

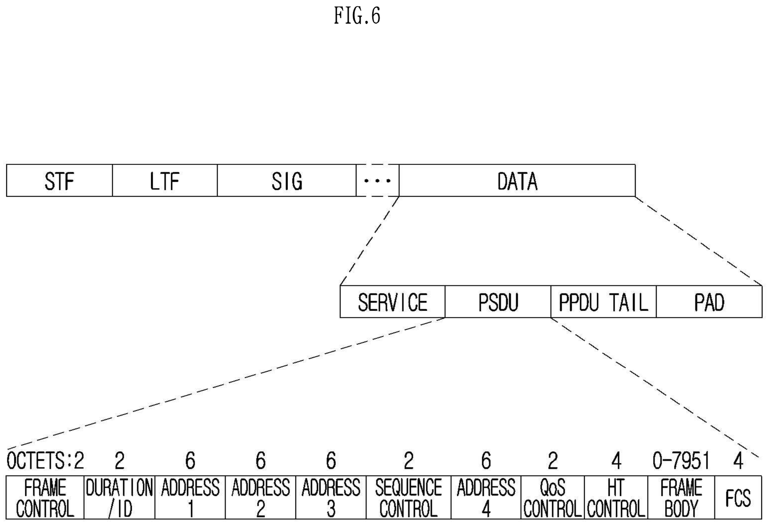

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

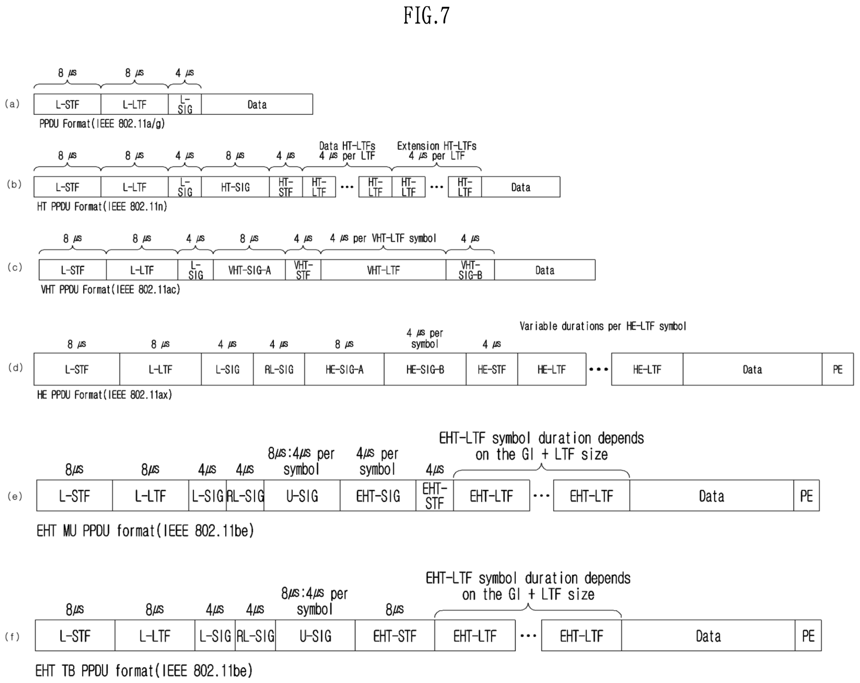

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.1 1ac) additionally includes VHT SIG-A, VHT-STF, VHT-LTF, and VHT-SIG-B fields to the basic PPDU format(as shown in FIG. 7(c)).

An example of the HE PPDU format (IEEE 802.1 1ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multi-link operation

Hereinafter, the multi-link (ML) operation supported by the STA according to the present disclosure is described.

The STA (AP STA and/or non-AP STA) described in the present disclosure may support multi-link (ML) communication. ML communication may refer to communication supporting multiple links. Links related to ML communication may include channels (e.g., 20/40/80/160/240/320MHz channels) of a frequency band (e.g., 2.4GHz band, 5GHz band, 6GHz band, etc.) in which the STA operates. The multiple links used for ML communication may be configured in various ways. For example, the multiple links supported for one STA for ML communication may belong to the same frequency band or may belong to different frequency bands. In addition, each link may correspond to a frequency unit of a predetermined size (e.g., a channel, a subchannel, an RU, etc.). In addition, some or all of the multiple links may be frequency units of the same size or may be frequency units of different sizes.

When one STA supports multiple links, the transmitting and receiving devices supporting each link may operate as one logical STA. That is, an MLD refers to a device that has one or more affiliated STAs as a logical entity and a single MAC service access point (SAP) for one MAC data service and logical link control (LLC). A non-AP MLD refers to an MLD in which each STA affiliated with the MLD is a non-AP STA. A multi-radio non-AP MLD refers to a non-AP MLD that supports receiving or exchanging frames on more than one link at a time. An AP MLD refers to an MLD in which each STA affiliated with the MLD is an AP STA.

Multi-link operation (MLO) can enable a non-AP MLD to discover, authenticate, associate, and set up multiple links with an AP MLD. Based on the supported capabilities exchanged during the association procedure, each link can enable channel access and frame exchange between the non-AP MLD and the AP MLD. An STA affiliated with an MLD may select and manage its capabilities and operating parameters independently from other STA(s) affiliated with the same MLD.

Through the multi-link setup process, the AP MLD and/or the non-AP MLD may transmit and receive link-related information that the MLD can support. The link-related information may include one or more of information about whether the MLD supports simultaneous transmit and receive (STR) operation or non-simultaneous transmit and receive (NSTR) operation, which allows simultaneous transmission and reception on multiple links, information about the number/upper limit of UL/DL links, information about the location/bandwidth/resources of UL/DL links, information about frame types (e.g., management, control, data, etc.) that are available or preferred on at least one UL/DL link, information about an ACK policy that is available or preferred on at least one UL/DL link, or information about a traffic identifier (TID) that is available on at least one UL/DL link.

An AP MLD (e.g., NSTR mobile AP MLD) may set one link among multiple links as a primary link. The AP MLD may transmit beacon frames, probe response frames, and group-addressed data frames only on the primary link. The remaining link(s) of the multiple links may be referred to as non-primary links. An AP MLD operating on a non-primary link may operate so as not to transmit beacon frames or probe response frames. In addition, a non-AP MLD may perform frame exchanges during authentication, (re)association, and 4-way handshaking only on the primary link.

A setup link is defined as enabled if at least one traffic identifier (TID) is mapped to the link through the multi-link setup process, and a setup link may be defined as disabled if no TID is mapped to the link. A TID must always be mapped to at least one setup link unless admission control is used. By default, a TID is mapped to all setup links, so all setup links can be enabled.

When a link is enabled, the link may be used for frame exchange depending on the power state of the non-AP STA operating on the link. Only MSDUs or A-MSDUs with a TID mapped to the enabled link can be transmitted on the link. Management frames and control frames may only be transmitted on the enabled link.

When a link is disabled, the link may not be used for frame exchange, including management frames for both DL and UL.

During the multi-link setup process, enabling/disabling of each link may be indicated through TID-to-Link mapping. TID-to-Link mapping may be performed in default mapping mode or/and negotiation mapping mode.

One of the STAs affiliated with the MLD may provide information about one or more links other than the link on which it is located, for multi-link discovery (e.g., obtaining information about multiple links including the corresponding link on one link) or multi-link setup (e.g., simultaneously associating on multiple links through exchange of association request/response frames on one link). A multi-link (ML) element may be defined to provide such information.

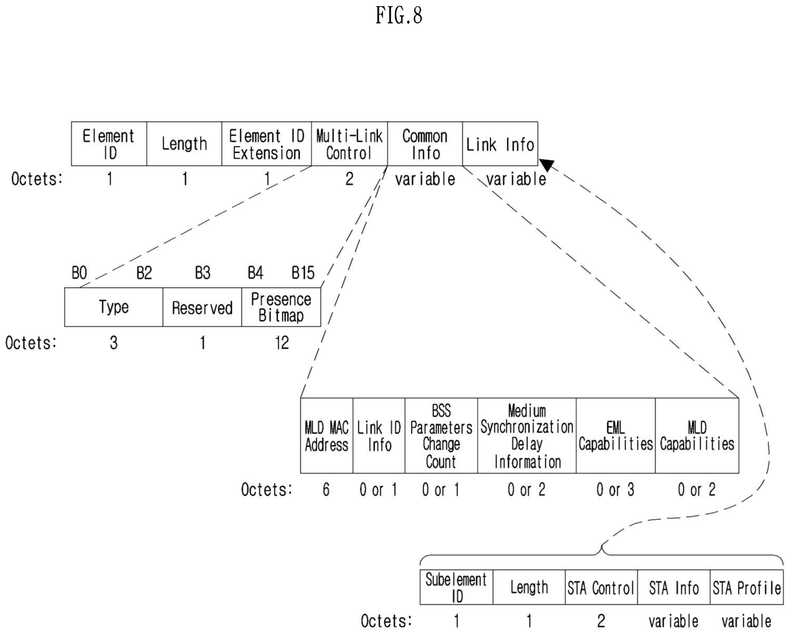

FIG. 8 exemplarily shows the structure of an ML element to which the present disclosure may be applied.

In the ML element, the element ID field and the element ID extension field may have specific values (e.g., 255 and 107) indicating that it is an ML element, and the length field may have a value indicating the length (e.g., in octet units) of the remaining fields excluding the element ID field and the length field.

The multi-link control field is defined as 2 octets in size and may include a 3-bit type subfield, a 1-bit reserved bit, and a 12-bit presence bitmap subfield. The type subfield may have a value indicating one of the following types: basic, probe request, reconfiguration, tunneled direct-link setup (TDLS), and priority access. The presence bitmap subfield indicates the presence or absence of various subfield(s) within the common info field, and may be defined in different formats depending on the various variants (or types) of the ML element.

The common info field is defined to be of variable size and may include a 6-octet MLD MAC address subfield, which may have a value specifying the MAC address of the MLD to which the STA transmitting the basic ML element belongs. In addition, a link ID info subfield, a BSS parameter change count subfield, a medium synchronization delay information subfield, an enhanced multi-link (EML) capability subfield, an MLD capability subfield, etc. may or may not be included in the common info field.

The link info field is defined to be variable in size, may include link-specific information, and may be optionally present. When the link info field is present, it may include one or more subelements. The format and order of the subelements may be defined in various ways. As an example of an optional subelement ID for a basic variant ML element, the value 0 of the subelement ID corresponds to the name of the per-STA profile and is extensible, the value 221 corresponds to the name of the vendor-specific name and whether it is extensible can be determined by the vendor, and the remaining values 1-220 and 222-255 may be reserved.

The STA-per-profile subfield may include a 1-octet subelement ID subfield, a 1-octet length subfield, a 2-octet STA control subfield, a variable-sized STA info subfield, and a variable-sized STA profile subfield. The STA control subfield may include information such as a link ID, whether a complete profile is included, whether an STA MAC address exists, etc. The STA info subfield may include information such as an STA MAC address. The STA profile subfield may include information included in a probe response or probe request frame body, information included in a (re)association response or (re)association request frame body, etc., depending on whether the reported STA is an AP STA or a non-AP STA.

The format of the ML element in FIG. 8 is exemplary, and the order, name, size, etc. of the fields/subfields may be changed, additional fields/subfields may be further defined, and some fields/subfields may be excluded. In short, the common information field includes common information between STAs in the MLD, and the link information field may include specific information for each STA/link (e.g., in a per-STA profile subelement including a link ID corresponding to the STA).

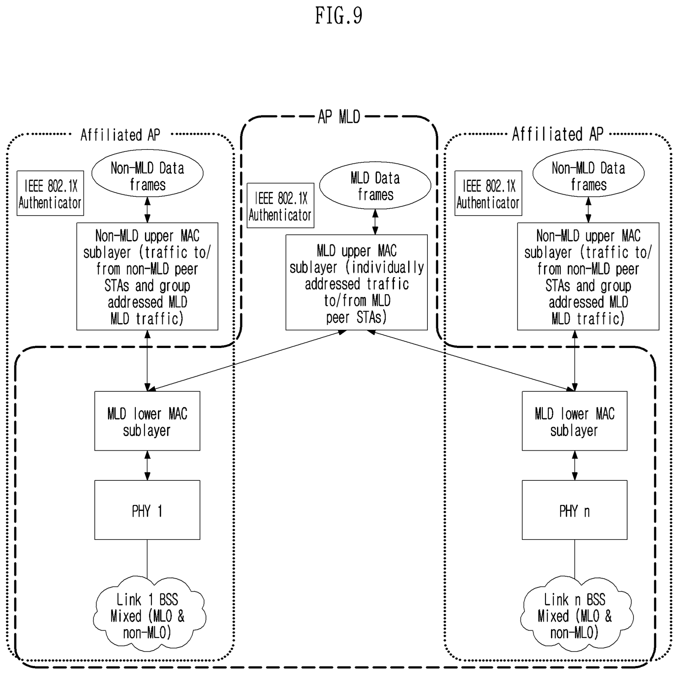

FIG. 9 is a diagram illustrating an example of a high-level structure for an AP MLD to which the present disclosure may be applied.

An AP MLD may include one or more APs. An AP MLD may have a high-level architecture as illustrated in FIG. 9. For example, the MLD may control various procedures/parameters common to multiple APs using an upper MAC sublayer. For example, authentication, association, sequence number (SN)/packet number (PN) allocation, power-saving buffering for individually addressed frames, etc. may be commonly controlled among APs affiliated with an AP MLD.

Each affiliated AP (e.g., AP 1, ..., AP n) may provide upper MAC sublayer functionality for non-MLD data frames (e.g., traffic transmitted and received with non-MLD STAs, group-addressed MLD traffic, etc.). The AP MLD may provide upper MAC sublayer functionality for MLD data frames (e.g., traffic transmitted and received with MLD STAs) and provide MLD data to lower MAC sublayers of each affiliated AP. Each affiliated AP can provide PHY functionality (e.g., PHY 1, ..., PHY n). Both ML operations (MLO) and non-MLO may be performed on links corresponding to each PHY (e.g., link 1, ..., link n).

### MLD-based roaming

Before describing the MLD-based roaming according to the present disclosure, a procedure in which a non-AP STA moves or roams from one AP to another in an existing wireless LAN system (e.g., BSS transition) is first described.

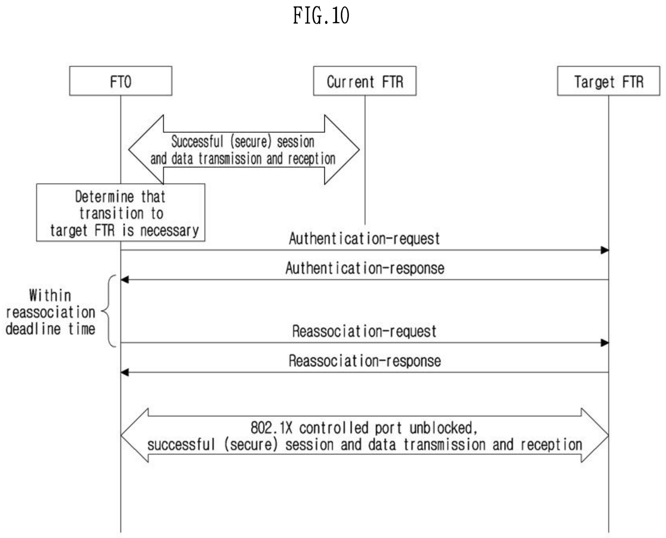

FIG. 10 is a diagram for explaining BSS transition in an existing wireless LAN system.

In the case of the FT (fast BSS transition) method, which is a representative example of BSS transition (or roaming), various processes such as authentication request/response and re-association request/response are required between the FTO (FT originator) and the target FTR in order to move from the current FTR (FT responder) to the target FTR. That is, in the existing BSS transition method, a re-association process is required on the same mobility domain.

In addition, after the process illustrated in FIG. 10, various operation parameters such as agreement related to BA (BlockAck) or SCS (Service Classification Service), SN, EDCAF (EDCA function) parameters, etc. are reset. Therefore, FTO must perform a large number of frame exchanges for FT and must perform agreement/configuration with a new FTR again. Therefore, the complexity and overhead of the FT process are high, and data loss may occur during the FT process. As such, it is difficult to provide seamless roaming to STAs in existing wireless LAN systems.

The present disclosure describes examples for seamless roaming based on MLD. For example, based on the AP MLD functionality described with reference to FIG. 9, when a non-AP STA moves/roams between entities affiliated with a single MLD, MLD-level parameters/configurations/agreements can be maintained without being reset.

In the following description, a STA performing roaming is referred to as RSTA, a currently associated AP is referred to as an OAP (old AP) or a first AP (or AP 1) and an AP to be newly associated is referred to a NAP (new AP) or a second AP (or AP 2). In addition, MLD-based roaming that is newly proposed in the present disclosure may be simply referred to as MLD roaming.

Additionally, each of RSTA, OAP, and NAP may be a STA affiliated with different MLDs.

For example, an RSTA is a non-AP STA affiliated with a non-AP MLD, and may perform MLD roaming simultaneously/together with one or more other non-AP STAs.

For example, an OAP may be an AP STA affiliated with the AP MLD 1, and other APs may be affiliated with the AP MLD 1 in addition to the OAP.

For example, a NAP may be an AP STA affiliated with AP MLD 2, and other APs other than a NAP may be affiliated with AP MLD 2.

For example, an OAP and a NAP may be affiliated with the same one upper MLD (or roaming MLD or AP MLD 0). For example, AP MLD 1 with which an OAP is affiliated may be affiliated with an upper MLD (e.g., AP MLD 0), and AP MLD 2 with which a NAP is affiliated may be affiliated with the same upper MLD (e.g., AP MLD 0). Alternatively, among the APs affiliated with AP MLD 1, at least one AP including an OAP may be affiliated with an upper MLD (e.g., AP MLD 0), and other AP(s) may not be affiliated with the same upper MLD (e.g., AP MLD 0) or may be affiliated with another upper MLD or may not be affiliated with an upper MLD. Similarly, among the APs affiliated with AP MLD 2, at least one AP including a NAP may be affiliated with an upper MLD (e.g., AP MLD 0), and other AP(s) may not be affiliated with the same upper MLD (e.g., AP MLD 0) or may be affiliated with another upper MLD or may not be affiliated with an upper MLD.

In addition, considering a non-AP MLD, at least one OAP affiliated with AP MLD 1 may be affiliated with an upper MLD, and at least one NAP affiliated with AP MLD 2 may be affiliated with the same upper MLD. For example, MLD-based roaming from a plurality of OAPs to a plurality of NAPs may be performed.

Hereinafter, the procedure for performing MLD-based roaming of STA is described in detail.

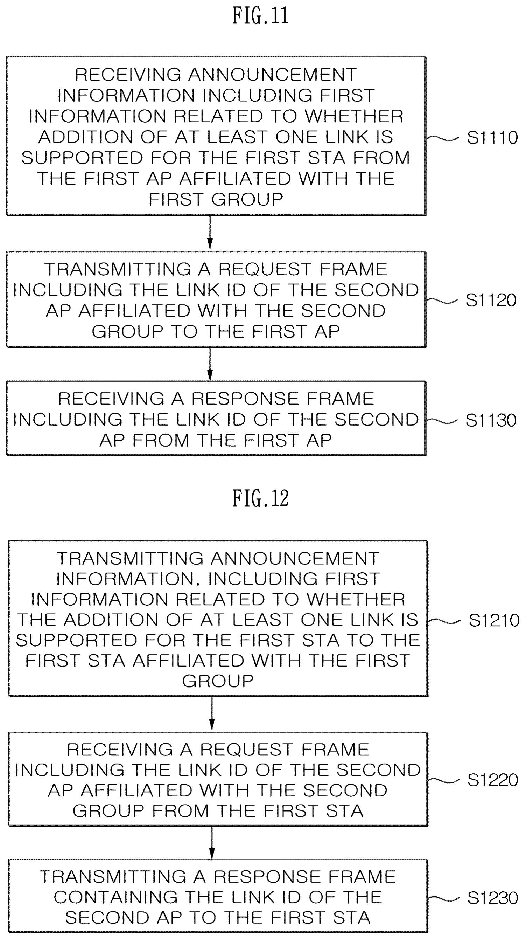

FIG. 11 is a diagram illustrating an example of a method for performing MLD-based roaming of a first STA according to the present disclosure. In FIGS. 11 and 12 , the first STA may be affiliated with a non-AP MLD. Furthermore, the first STA may be associated with a first AP affiliated with a first (AP) group to transmit and receive data.

The first STA may receive announcement information including first information related to whether addition of at least one link is supported for the first STA from the first access point (AP) affiliated with the first group (S1110).

Here, the announcement information may be included in an MLD-based roaming element or a reduced neighbor report (RNR) element included in a management frame. The MLD-based roaming element or RNR element may include a first subfield related to at least one group ID and a second subfield related to the first information (e.g., a temporary link addition subfield).

For example, based on the first information indicating that addition of at least one link is supported for the first STA by the second subfield, the first STA may add a link with another AP while maintaining a link with the first AP.

The first STA may transmit a request frame including the link ID of the second AP affiliated with the second group to the first AP (S1120).

That is, the first STA may transmit a request frame to the first AP requesting MLD-based roaming to the second AP affiliated with the first group. The request frame may include a group ID associated with the second group to which the second AP is affiliated.

For example, Group 1 and Group 2 may be affiliated with the same AP MLD. To roam from a first AP included in Group 1 to a second AP included in Group 2, a first STA may transmit a request frame to the first AP.

In another example of the present disclosure, each of the first group and the second group may be mapped to a separate AP MLD. For example, the first group may be mapped to the first AP MLD, and the second group may be mapped to the second AP MLD. That is, in describing the present disclosure, each group may be represented by a separate AP MLD. In addition, the first AP MLD and the second AP MLD may be affiliated with a separate group entity (or the entire AP MLD). The group entity (or the entire AP MLD) may collectively refer to a specific entity to which each AP MLD is affiliated with.

The group object may correspond to the (entire) AP MLD illustrated in FIGS. 9, 13, and 18. For example, the group object may perform the function of the upper MAC sublayer of the MLD described with reference to FIG. 9.

For example, the request frame may include second information requesting the addition or deletion of a link between the first STA and the second AP. Additionally, the request frame may include third information regarding whether the addition or deletion of a link between the first STA and the second AP is a temporary link addition or deletion.

For example, the second information and the third information may be indicated via a single subfield included in the reconfiguration multi-link element of the request frame. For example, the second information and the third information may be indicated via a single subfield as disclosed in Table 2, which will be described later.

As another example, the common information field or STA control field of the reconfiguration multi-link element may include a third subfield (e.g., a type subfield) related to the second information and a fourth subfield (e.g., a temporary subfield) related to the third information. That is, the second information and the third information may each be indicated by a separate subfield.

For example, based on a request for link addition between the first STA and the second AP via the third and fourth subfields (e.g., based on information requesting link addition between the first STA and the second AP being indicated by the third subfield and information requesting temporary link addition or deletion being indicated by the fourth subfield), while the link between the first STA and the first AP is connected, the link between the first STA and the second AP may be connected.

The first STA may receive a response frame including the link ID of the second AP from the first AP (S1130).

Based on the fact that the response frame includes information indicating acceptance of roaming to the second AP, an association process between the first STA and the second AP may be initiated. Additionally, the response frame may include a basic ML element, and the basic ML element may include AID and traffic identifier-to-link mapping information for the first STA.

Based on the completion of the roaming procedure to the second AP (e.g., the completion of the association procedure between the first STA and the second AP), the link between the first STA and the first AP may be deleted.

As an example of the present disclosure, while a roaming procedure of a first STA is being performed, a roaming procedure of a second STA affiliated with a non-AP MLD may be performed. That is, when the roaming procedure of the first STA is being performed/completed, a roaming procedure of another STA affiliated with a non-AP MLD may be performed. As another example of the present disclosure, a roaming procedure of a second STA may be performed while a roaming procedure of the first STA is being performed. That is, each of the first STA and the second STA affiliated with a non-AP MLD may perform a roaming procedure simultaneously. As another example, each STA affiliated with a non-AP MLD may perform a roaming procedure regardless of the order.

As another example, the response frame may include fourth information related to a multi-link device (MLD) roaming timer. After the response frame is transmitted, the MLD roaming timer may start operating. Based on the expiration of the MLD roaming timer, the link between the first STA and the first AP may be deleted, and the first STA may communicate with the associated second AP.

The method performed by the first STA described in the example of FIG. 11 may be performed by the first device (100) of FIG. 1. For example, one or more processors (102) of the first device (100) of FIG. 1 may receive announcement information including first information related to whether addition of at least one link is supported for the first STA from a first AP affiliated with a first group through one or more transceivers (106). The one or more processors (102) may transmit a request frame including a link ID of a second AP affiliated with a second group to the first AP through one or more transceivers (106). The one or more processors (102) may receive a response frame including a link ID of the second AP through one or more transceivers (106).

The above memory (104) can store instructions for performing the method described in the example of FIG. 11 when executed by one or more processors (102).

FIG. 12 is a diagram illustrating an example of a method in which a first AP according to the present disclosure supports MLD-based roaming of an STA.

The first AP may transmit announcement information, including first information related to whether the addition of at least one link is supported for the first STA, to the first STA affiliated with the first group (S1210). That is, the first AP may transmit announcement information, including parameters related to MLD-based roaming and information regarding whether the simultaneous connection of two or more links of the first STA is supported, to the first STA.

The first AP may receive a request frame including includes the link ID of the second AP affiliated with the second group from the first STA (S1220). The request frame may include the link ID of the second AP and the group ID associated with the second group to which the second AP is affiliated. The AP may identify the AP to which the first STA intends to roam through the link ID and group ID.

Additionally, the first AP may confirm that the first STA requests a (temporary) additional link connection with the second AP through the request frame.

The first AP may transmit a response frame including the link ID of the second AP to the first STA (S1230). The first AP may transmit a response frame containing information regarding roaming between the first STA and the second AP to the first STA. Accordingly, a (temporary) link between the first STA and the second AP may be additionally connected. In addition, an association procedure between the first STA and the second AP may be initiated by the response frame.

The method performed by the first AP described in the example of FIG. 12 may be performed by the second device (200) of FIG. 1. For example, one or more processors (202) of the second device (200) of FIG. 10 may transmit announcement information including first information related to whether addition of at least one link is supported for the first STA to the first STA via one or more transceivers (206). The one or more processors (202) may receive a request frame including a link ID of a second AP affiliated with a second group from the first STA via one or more transceivers (206). The one or more processors (202) may transmit a response frame including a link ID of the second AP to the first STA via one or more transceivers (206).

Furthermore, one or more memories (204) of the second device (200) may store instructions for performing the method described in the example of FIG. 10 when executed by one or more processors (202).

The examples of FIGS. 11 and 12 may correspond to some of the various examples of the present disclosure. Below, various examples of the present disclosure, including the examples of FIGS. 11 and 12, will be described in more detail.

### Embodiment 1

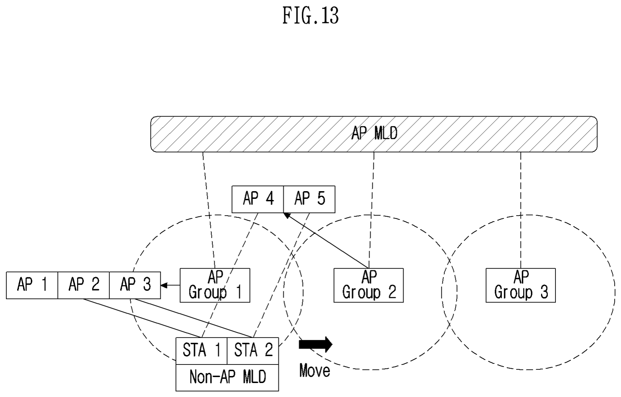

Embodiment 1 describes exemplary operations of STAs and APs for MLD-based roaming. As an example of the present disclosure, FIG. 13 is a diagram illustrating an example of the structure and procedure of MLD-based roaming according to the present disclosure.

As illustrated in FIG. 13, AP 1, AP 2, and AP 3 may be affiliated with AP group 1, and AP 4 and AP 5 may be affiliated with AP group 2. Each AP group may not be collocated, and the AP(s) affiliated with each AP group may be collocated at the same or similar locations. That each AP is collocated may include not only the case where each AP is affiliated with the exact same device, but also the case where each AP is collocated at a logically similar location even if it does not belong to the exact same device.

Since AP MLD is a logical entity, it can be implemented as a specific physical device, but it refers to an MLD that covers affiliated APs regardless of location and performs/applies MLO. In other words, all APs affiliated with an AP group may include affiliated APs of one AP MLD.

As an example of the present disclosure, as illustrated in FIG. 13, it is assumed that a non-AP MLD is in a multi-link setup with an AP MLD, and STA 1 and STA 2 are each connected to AP 2 and AP 3 included in AP group 1. When the non-AP MLD moves to an area where AP group 2 exists, roaming from AP group 1 to AP group 2 may be required. That is, through the roaming, STA 1 may be connected to AP 4, and STA 2 may be connected to AP 5. Here, during the roaming process, STA 1 and STA 2 may temporarily associate with AP 4 and AP 5, respectively, so that AP 4 and AP 5 may transmit frames to STA 1 and STA 2, respectively.

Here, the non-AP MLD may include multiple affiliated STAs, or may include one STA. The roaming operation/architecture illustrated in FIG. 13 may be applied to a non-AP MLD including one or more affiliated STAs, and the roaming operation/architecture may also be applied to non-AP STA(s) that do not form the MLD.

In describing the present disclosure, roaming may be applied not only to movement between groups but also to movement between APs within a specific AP group. In addition, MLD-based roaming according to the present disclosure may be performed by changing links while maintaining the ML setup without tearing down the existing ML setup. For example, while maintaining the ML setup for the upper MLDs of AP 1 and AP 2, an STA MLD may move from AP group 1 to AP group 2 by changing links within the upper MLD. Accordingly, overhead and the risk of data loss can be lowered compared to the existing BSS transition.

The MLD-based roaming procedure may include AP group ID setting (Embodiment 1-1), AP announcement (Embodiment 1-2), and frame exchange between the AP and STA (Request of Embodiment 1-3 and Response of Embodiment 1-4).

An ID may be assigned/set for each AP group (consisting of AP(s) deployed at the same location). In the present disclosure, the ID assigned/set for each AP group will be referred to as a group ID. For example, the group ID may be set as a unique ID within a single AP group. As another example, the group ID may be set as a unique ID for each AP group within the entire AP MLD.

The announcement may correspond to a procedure in which each AP affiliated with the upper MLD informs the STA(s) of information such as whether MLD-based roaming is supported. Frame exchange between the STA and the AP may be performed based on this announcement information.

Frame exchange may correspond to a procedure of transmitting and receiving a frame that triggers/initiates MLD-based roaming between an AP and an STA. Through frame exchange, information and settings required for MLD-based roaming may be negotiated between the AP and the STA, and MLD-based roaming may be completed based on the negotiated information/settings. Accordingly, the STA may no longer operate with an OAP (old AP) (e.g., an AP included in AP group 1) and may operate with an NAP (New AP) (e.g., an AP included in AP group 2).

In this way, for MLD-based roaming to be triggered/initiated, frame exchange is required between the STA and the AP. The exchanged frames may correspond to management frames (e.g., beacons, (re)association requests/responses, probe requests/responses, action frames, etc.). For example, an action frame, which is a type of management frame, may be used for frame exchange.

In the examples described below, the frame transmitted by an STA (or AP) to request MLD roaming to an AP (or STA) is referred to as an MLD roaming request frame, and the frame transmitted by an AP (or STA) to the STA (or AP) in response to the MLD roaming request frame is referred to as an MLD roaming response frame.

Hereinafter, specific examples of the procedure for setting a group ID for each AP group, the procedure for requesting information about APs within each AP group, the notification procedure for MLD-based roaming, and the frame exchange procedure are described.

Additionally, a method for temporarily adding/deleting links for MLD-based roaming is described. Accordingly, an STA can maintain two links for a certain period of time while performing MLD-based roaming.

### Embodiment 1-1

Embodiment 1-1 relates to a procedure for setting a group ID for each AP group. A moving MLD (or STA) may need to recognize at least one AP among the AP MLDs to which it is connected, to perform roaming. In addition, when the MLD (or STA) requests roaming, the AP MLD may check data and management information to be transmitted from the OAP to the NAP, depending on which NAP the MLD (or STA) is moving to. Therefore, Embodiment 1-1 describes an identification method that takes into account affiliated AP(s) that are not arranged in the same location within the AP MLD (i.e., a method for setting an ID for roaming in the AP MLD).

An ID (i.e., a group ID) may be assigned to a group of APs collocated in the same location. For example, a unique group ID may be set within an AP group (Embodiment 1-1-1). As another example, a unique ID may be set for each AP group within the entire AP MLD (Embodiment 1-1-2).

### Embodiment 1-1-1

Embodiment 1-1-1 relates to a method for setting a unique ID within an AP group in an AP MLD. That is, the group ID may be unique within one AP group.

As an example of the present disclosure, the group ID may be set to an integer greater than or equal to 0. For example, if the field indicating the group ID consists of 4 bits, the group ID may be set to one of 0 to 15. As another example, if the field indicating the group ID consists of 8 bits, the group ID may be set to one of 0 to 127.

For example, if the group ID is 0, APs with the group ID may be affiliated with the same AP group deployed at the same location. That is, the MLD (or STA) may determine that APs with the group ID are deployed at the same location. Other group IDs may be mapped so that they can be uniquely identified to each group.

Additionally, since other APs in the set of multiple BSSIDs (e.g., transmitted BSSID (i.e., TxBSSID) or non-transmitted BSSID (nonTxBSSID)) to which each AP in the AP group belongs also use the same physical resources, the same group ID may be assigned to the other APs. However, the AP MLD IDs of the AP MLDs to which the other APs belong may be different.

### Embodiment 1-1-2

Embodiment 1-1-2 relates to a method for setting a unique ID within an AP MLD. That is, a group ID may be set uniquely for each AP group within the entire AP MLD.

As described above, the group ID may be set to an integer greater than or equal to 0. For example, if the field indicating the group ID consists of 4 bits, the group ID may be set to one of 0 to 15. As another example, if the field indicating the group ID consists of 8 bits, the group ID may be set to one of 0 to 127.

Additionally, a group ID of APs performing roaming may be set. That is, an MLD roaming ID for MLD roaming may be set between APs having the corresponding group ID.

The existing MDID (mobility domain ID) field may be used to set the MLD roaming ID and/or group ID, but since the MDID field has a size of 2 octets, the MLD roaming ID and/or group ID may be set in a smaller field.

### Embodiment 1-2

Embodiment 1-2 relates to an announcement procedure for MLD-based roaming based on group ID.

Each AP included in the AP MLD may announce whether MLD-based roaming described in the present disclosure is possible and a group ID, etc. For example, each AP may transmit announcement information including information indicating whether roaming is possible (e.g., "MLD roaming enabled"), a group ID, an MLD roaming ID, and/or temporary link addition/deletion information. The information indicating whether roaming is possible may be composed of 1 bit, but is not limited thereto. In addition, the group ID refers to the group ID of the AP group constituting the AP MLD as described above. That is, APs having the same group ID can be affiliated with the same AP group.

The announcement information may be transmitted via a management frame (e.g., a beacon frame, a probe frame, a (re)association response frame, etc.). For example, it may be included in an MLD roaming information element (IE) or a reduced neighbor report (RNR) IE containing the announcement information.

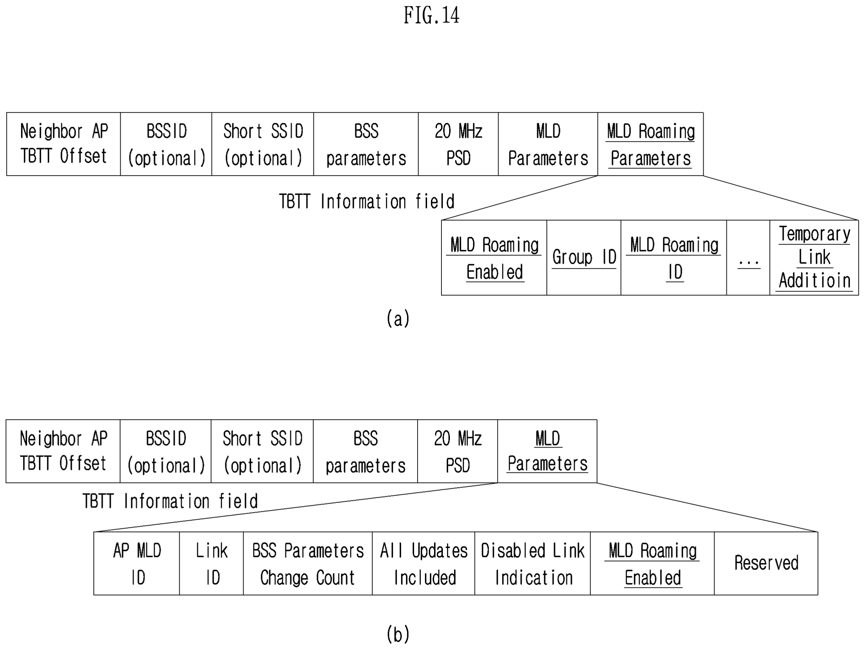

For example, the RNR IE may include a target beacon transmission time (TBTT) information header, an operation class, a channel number, and a TBTT information set field. Among these, the TBTT information set may include one or more TBTT information fields. As illustrated in (a) of FIG. 14, the TBTT information field may include neighboring AP TBTT offset, BSSID, short BSSID, BSS parameter, 20MHz PSD (Power Spectral Density), and MLD parameter subfields. The MLD parameter may include, in addition to the AP MLD ID, link ID, BSS parameter change count, all update included, and disabled link indication fields, an MLD roaming enabled subfield corresponding to announcement information.

Additionally, the TBTT information field may include MLD roaming parameters, and the MLD roaming parameters may include announcement information (i.e., MLD roaming enabled information, group ID information, MLD roaming ID, and temporary link addition information, etc.). The example of (a) in Fig. 14 corresponds to a case where the size of the MLD parameter subfield is not sufficient to include the announcement information. The size of the MLD parameter subfield may be changed, but this may cause decoding issues for IEEE 802.11 be-based STAs.

Here, since the fact that the MLD roaming parameter is included in the TBTT information field itself may mean that MLD roaming is possible, the MLD roaming enabled information may be omitted.

The subfield indicating temporary link additional information as shown in (a) of FIG. 14 may indicate whether a link can be temporarily added or removed for one STA. That is, the subfield indicating temporary link additional information may indicate that one STA supports having two or more links for a certain period of time. For example, the subfield indicating temporary link additional information may consist of 1 bit, but is not limited thereto.

As another example, as illustrated in (b) of FIG. 14, MLD roaming enabled information may be included in the MLD parameter subfield. In addition, the MLD roaming ID and/or group ID may be transmitted via the MLD roaming parameter subfield or a separate field.

Additionally or alternatively, the above-described notice information may be included in the basic multi-link IE.

### Embodiment 1-3

Request information for triggering/initiating MLD-based roaming may be included in a management frame (e.g., an MLD roaming request frame). For example, the MLD roaming request frame may have the exemplary format of Table 1. The format of Table 1 is exemplary, and some fields may be omitted or may include additional fields not illustrated.

**[Table 1]**

| Order | Information |
|---|---|
| 1 | Category |
| 2 | UHR action or protected UHR action |
| 3 | Dialog Token |
| 4 | Reconfiguration ML elements |

The category of order 1 may be set to a value indicating a category corresponding to the MLD roaming request frame. For example, the category may correspond to a new UHR action or a protected UHR action. This is exemplary, and the MLD roaming request frame may also be defined as a category with a different name. The UHR action or protected UHR action of order 2 may be set to a value corresponding to the MLD roaming request.

The dialog token of order 3 may be set to a value for matching requests and responses.

The reconfiguration ML element of order 4 corresponds to an element including information required for an MLD-based roaming request. This is exemplary, and elements/fields with other names containing information required for an MLD roaming request may be defined and utilized.

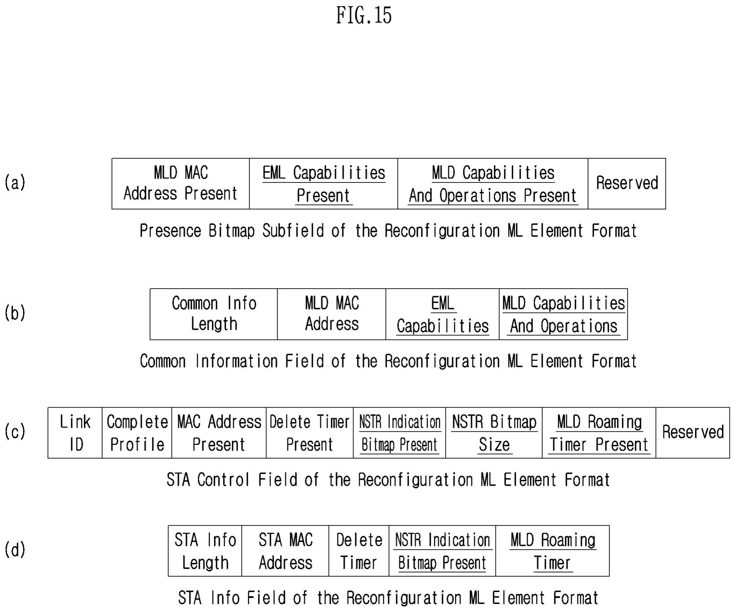

FIG. 15 is a diagram illustrating an example of a reconfiguration ML element including request information according to the present disclosure.

Fig. 15(a) illustrates an example of a presence bitmap field (e.g., Presence Bitmap in the Multi-Link Control field of Fig. 8). The presence bitmap of a reconfiguration ML element may include information on whether an MLD MAC address subfield exists. In addition, the presence bitmap according to the present disclosure may indicate, through specific bit positions in the bitmap, whether an enhanced ML (EML) capability subfield exists in a common information field and whether an MLD capability and operation subfield exists in a common information field.

FIG. 15(b) illustrates an example of a common information field (e.g., the Common Info field of Fig. 8). The common information field of the reconfiguration ML element may include a common information length subfield and an MLD MAC address subfield. Additionally, the common information field according to the present disclosure may include both, one of, or neither of the EML capability subfields or the MLD capability and operation subfields (depending on the value at the corresponding bit position of the presence bitmap).

When more than one STA (especially in the case of non-AP MLD) moving to NAP performs MLD-based roaming at the same time, EML capability information/MLD capability and operation information may be different, so this information may be provided to the AP as MLD roaming request information.

FIG. 15(c) illustrates an example of a STA control (e.g., STA Control of Fig. 8) field included in a per-STA profile subelement of a link information field (e.g., Link Info field of Fig. 8) of a reconfiguration ML element. Fig. 15(d) illustrates an example of a STA information (e.g., STA Info of Fig. 8) field included in a Per-STA profile subelement of a link information field (e.g., Link Info field of Fig. 8) of a reconfiguration ML element.

When more than one STA performs MLD-based roaming simultaneously, one or more per-STA profile sub-elements may be included in the MLD roaming request frame.

The presence or absence of each subfield included in the STA information field may be indicated by the presence subfield of the corresponding subfield in the STA control field. For example, the NSTR indication bitmap presence subfield of the STA control field may indicate whether the NSTR indication bitmap subfield exists in the STA information field, and if present, the bitmap size may be indicated by the NSTR bitmap size subfield of the STA control field. For example, the MLD roaming timer presence subfield of the STA control field may indicate whether the MLD roaming timer subfield exists in the STA information field.

The value of the Link ID subfield of the STA control field of FIG. 15(c) may be set to a link identifier value corresponding to one of the NAPs (e.g., AP 2 affiliated with AP MLD 2, and, if present, other AP(s) affiliated with AP MLD 2). For example, the Link ID subfield of the STA control field of the first per-STA profile subelement may be set to a link identifier value corresponding to AP 2 affiliated with AP MLD 2, and the Link ID subfield of the STA control field of the second per-STA profile subelement may be set to a link identifier value corresponding to another NAP affiliated with AP MLD 2.

The complete profile of the STA control field of Fig. 15(c) may correspond to complete information of the STA (i.e., all information included in the (re)association request frame). In the MLD-based roaming process, since a new STA is not associated with an AP affiliated with an upper MLD, but an existing STA moves between APs affiliated with the upper MLD, a case in which the capabilities and operation parameters of the STA do not change may be considered. Considering a case in which the information of the STA is known to the upper MLD, the complete profile subfield of Fig. 15(c) may be set to a value indicating that changed profile information (or partial profile information) is included.

For example, a partial profile corresponds to a case where the value of the complete profile subfield of the STA control field is 0, and only information fields/elements that change in the STA profile field (e.g., the STA Profile field of FIG. 8) within the per-STA profile sub-element may be included (i.e., information that changes compared to OAP when moving to NAP). Alternatively, the complete profile subfield of the STA control field may be changed to a name called a changed profile subfield, and only information fields/elements that change in the STA profile field (i.e., information that changes compared to OAP when moving to NAP) may be included when the value of the subfield is 1.

Alternatively, it may be considered that the capabilities and operating parameters of the STA are completely changed during the MLD-based roaming process. In this case, the value of the complete profile subfield of FIG. 15(c) may be set to 1, and the STA profile field may include complete information (e.g., all information included in the (re)association request frame).

When an STA moves to a different AP, information about STR or NSTR for each link may be different from a non-AP MLD perspective, so an NSTR indication bitmap (e.g., the NSTR indication bitmap subfield of FIG. 15(d)) may be included in the MLD roaming request frame.

The MLD roaming timer subfield may indicate the point in time when MLD-based roaming is completed and the STA no longer operates with the OAP and operates with the NAP. The MLD roaming timer value included in the request frame transmitted by the STA can be interpreted/used as reference information in the AP or upper MLD.

Additionally or alternatively, the MLD roaming timer information may include a value for each of one or more NAPs, or may include a value that is common to one or more NAPs. For example, a number of individual MLD roaming timer information corresponding to the number of NAPs may be included in the per-STA profile sub-element of the MLD roaming request frame. For example, a single MLD roaming timer information that is common to one or more NAPs may be included in the common information field of the MLD roaming request frame.

Additionally, assume that a temporary link addition is indicated for the STA (i.e., two or more multi-link connections are supported for the STA for a temporary period of time). In this case, the expiration of the MLD roaming timer may mean that the STA has completely terminated the connection with the OAP (i.e., temporarily deleted or deleted) and connected to the NAP. In this case, the MLD roaming timer may also be utilized as a deletion timer.

When the MLD roaming timer is applied commonly to all APs, information about the MLD roaming timer may be included in the common information field. In this case, the presence or absence of the MLD roaming timer may be indicated in the common information field through an existence bitmap.

A group ID can be added to the reconfiguration ML element illustrated in FIG. 15. The group ID refers to the ID of the AP group to which the non-AP MLD (or STA) roams.

### Embodiment 1-3-1

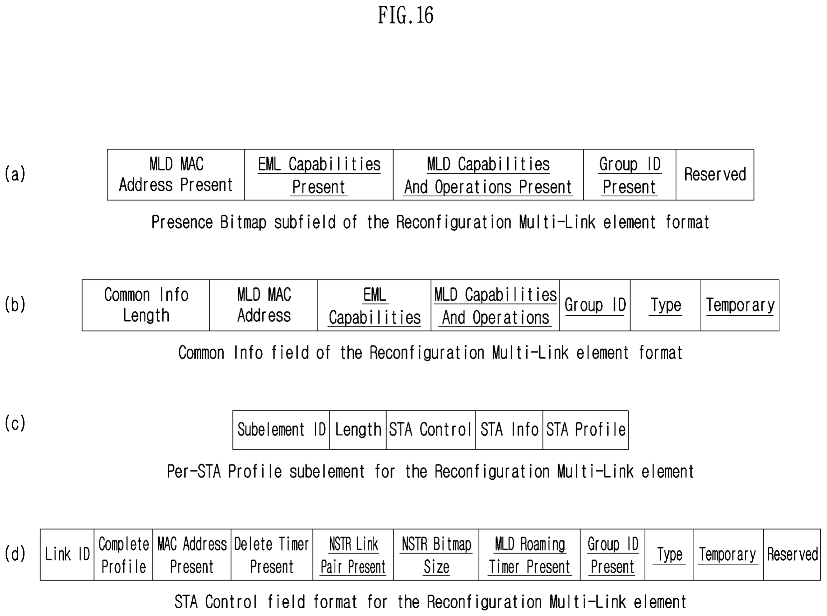

As an example of the present disclosure, the group ID may be included in the common information field of the reconfiguration ML element. Specifically, as illustrated in (a) of FIG. 16, whether the group ID is included in the common information field of the reconfiguration ML element may be indicated through the presence bitmap of the reconfiguration ML element. As illustrated in (b) of FIG. 16, when the group ID is included only in the common information field, roaming to AP(s) in the AP group with the same group ID may be requested through the MLD roaming request frame.

That is, if a group ID is included in the common information field, a non-AP MLD (or STA) cannot request roaming for multiple group IDs even within the same AP MLD. For example, if a group ID of a specific AP group is included in the common information field, a non-AP MLD (or STA) cannot request roaming to an AP within its current AP group or to an AP in an AP group other than the specific AP group. However, when performing roaming between groups, the method according to embodiment 1-3-1 may have reduced overhead compared to the case where a group ID is included in the link information field.

Additionally, the common information field of the reconfiguration ML element may include a type subfield as a field for including the ability to temporarily add/delete links for MLD-based roaming.

As an example of the present disclosure, the type subfield may be composed of 2 bits, but is not limited thereto. For example, if the type subfield is composed of 2 bits, the type field may be composed as shown in Table 2. However, this is an embodiment, and the type corresponding to the type subfield value may be defined as a different type. In addition, "temporary deletion" in Table 2 may be replaced with "delete" corresponding to the type subfield value 1.

**[Table 2]**

| Type field value | Type |
|---|---|
| 0 | add |
| 1 | delete |
| 2 | temporary add |
| 3 | temporary delete |

If "Add" is indicated by the type subfield, this may mean that the STA of the non-AP MLD requests an additional link connection with an AP (e.g., a NAP) of a specific AP MLD. If "Delete" is indicated by the type subfield, this may mean that the STA of the non-AP MLD requests to disconnect the current link (e.g., disconnect the link with an OAP). If "Temporary Add" is indicated by the type subfield, this may mean that the STA of the non-AP MLD requests to add a link with another AP (e.g., a NAP) other than the AP (e.g., an OAP) to which the current link is connected.

As another example of the present disclosure, as illustrated in (b) of FIG. 16, the common information field (or MLD roaming request frame body) may include a temporary subfield and a type subfield as fields for including a function of temporarily adding/deleting a link for MLD-based roaming. As an example, each of the temporary subfield and the type subfield may be composed of 1 bit, and the type subfield may indicate "addition" or "deletion". In addition, the temporary subfield may indicate information on whether the "addition" or "deletion" of the type subfield indicates temporary addition or temporary deletion.

For example, if "add" is indicated by the type subfield and information indicating that the operation indicated by the type subfield is a temporary operation is indicated by the temporary subfield, this may correspond to "temporary add" in Table 2.

When the type and/or temporary subfields are included in the common information field, the STA(s) included in the non-AP MLD can perform only one operation for all APs. That is, when "add" is indicated by the type and/or temporary subfields, the STA(s) can only make a request to add a link for each AP(s).

### Embodiment 1-3-2

As an example of the present disclosure, as illustrated in (c) of FIG. 16, the reconfiguration ML element may include a link information field, and the link information field may include one or more per-STA profile sub-elements. As illustrated in (d) of FIG. 16, a roaming request to a specific AP affiliated with a specific AP group may be indicated through a Link ID and a Group ID included in the STA Control field of the per-STA profile sub-element.

Additionally or alternatively, as illustrated in (d) of FIG. 16, the STA control field may include a type and/or temporary subfield (i.e., the type and/or temporary subfield described in Embodiment 1-3-1). That is, the type and/or temporary subfield for temporarily adding/deleting a link for MLD-based roaming may be included in the STA control field format (included in the link information field). Since the configuration and function of the type and/or temporary subfield have been described above, a redundant description will be omitted.

When the type and/or temporary subfields are included in the link information field, the STA(s) included in the non-AP MLD may request different actions for each AP. That is, the STA(s) may request "temporary addition" for one AP and "delete" for another AP via the type and/or temporary subfields.

Roaming may be requested for one or more APs corresponding to one or more group IDs via one or more STA-per-profile sub-elements. However, if roaming is requested based on the same group ID, the overhead may be greater than the method according to embodiment 1-5-1.

### Embodiment 1-3-3

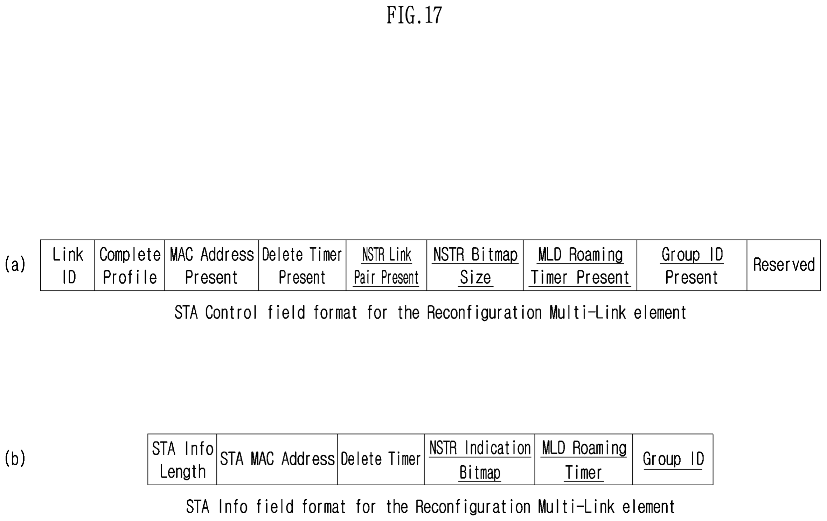

As an example of the present disclosure, as illustrated in (a) of FIG. 17, the STA control field of the per-STA profile sub-element includes a group ID presence sub-field, and the group ID presence sub-field may indicate whether an AP group ID to which an AP corresponding to a specific link ID belongs exists. In addition, as illustrated in (b) of FIG. 17, the group ID may be included in the STA information field or the STA profile field.

Roaming may be requested for one or more APs corresponding to one or more group IDs via one or more STA-specific profile sub-elements. In particular, assume a case in combination with the method according to embodiment 1-3-1 (i.e., the method of including the group ID in the common information field). In this case, if roaming is requested for APs corresponding to the same group ID, the group ID may not be included in the STA information field or the STA profile field, thereby reducing overhead.

As another example, if a group ID is indicated through the common information field, roaming to the AP(s) corresponding to the same group ID may be implicitly indicated to be requested. Accordingly, the group ID may not be included in the STA information field or the STA profile field, and the Group ID presence field may also not be present.

### Embodiment 1-4

Response information for an MLD-based roaming request may be included in a management frame (e.g., an MLD roaming response frame). For example, the MLD roaming response frame may have the exemplary format of Table 3. The format of Table 3 is exemplary, and some fields may be omitted or may include additional fields that are not illustrated.

**[Table 3]**

| Order | Information |
|---|---|
| 1 | Category |
| 2 | UHR action or protected UHR action |
| 3 | Dialog Token |
| 4 | Status code |
| 5 | Basic ML element |
| 6 | Group key information |
| 7 | AID |
| 8 | Channel switching announcement element (optional) |
| 9 | Extended Channel Switching announcement Element (optional) |
| 10 | TID-to-link mapping element (optional) |

The MLD roaming response frame may include link-level parameters. For example, the link-level parameters may include information necessary to change the link while maintaining the ML setup. The category of order 1 may be set to a value indicating the category corresponding to the MLD roaming response frame. For example, the category may correspond to a new UHR action or a protected UHR action. This is exemplary, and the MLD roaming response frame may also be defined as a category with a different name.

The UHR action or protected UHR action of order 2 may be set to a value corresponding to the MLD roaming response.

The dialog token of order 3 may be set to a value for matching requests and responses.

The status code of order 4 may be set to one of various values indicating success, failure, accept, reject, unsupported, invalid, error, etc. Among the values indicated by the status code, failure, rejection, unsupported, invalid, error, etc. may be defined as different values depending on the cause.

The basic ML element of order 5 may include information required for roaming related to the upper MLD (or roaming MLD) and the roaming target AP/AP MLD (e.g., NAP or AP MLD including NAP). For this purpose, some fields of the existing basic ML element format may be modified, omitted, or new fields may be added.

For example, the common information field of the basic ML element may have a format similar to the example of the common information field of FIG. 8. Here, the common information field of the basic ML element of the MLD roaming response frame may include information common to or corresponding to the NAP(s) through which one or more STAs perform MLD-based roaming.

For example, the link information field of the basic ML element may basically have a format similar to the example of the link information field of FIG. 8. Here, the link information field of the basic ML element of the MLD roaming response frame may include one or more per-STA profile sub-elements for corresponding APs when one or more STAs perform MLD-based roaming simultaneously. Accordingly, the STA control field, the STA information field, and/or the STA profile field included in the per-STA profile sub-element of the link information field of the basic ML element of the MLD roaming response frame may include the following characteristics.

The link ID subfield of the STA control field may be set to a link ID value corresponding to the NAP.

A complete profile in the STA control field may correspond to complete information of the AP (i.e., all information included in the (re)association response frame). When an STA performs MLD-based roaming between APs affiliated with the same upper MLD (or roaming MLD), a case may be considered where the capabilities or operating parameters of the AP do not change. In this case, the complete profile subfield may be set to a value (e.g., 0) indicating that changed profile information (or partial profile information) is included. Accordingly, the STA profile field in the per-STA profile subelement may only include information fields/elements that change (i.e., information that changes in a NAP compared to an OAP).

Alternatively, it may be considered that the capabilities and operating parameters of the AP may be completely changed during the MLD-based roaming process. In this case, the value of the complete profile subfield may be set to 1, and the STA profile field may contain complete information (e.g., all information included in the (re)association response frame).

Also, based on the type of MLD roaming request frame and/or the temporary subfield indicating (temporary) deletion, the complete profile for the corresponding AP may already be known, so the complete profile subfield value may be indicated as 0.

The STA control field may include a field indicating whether an MLD roaming timer exists. If the MLD roaming timer is indicated to exist, the STA information field may include an MLD roaming timer subfield. The MLD roaming timer subfield may indicate a point in time when MLD-based roaming is completed and the STA no longer operates with an OAP but operates with a NAP. The value of the MLD roaming timer included in the MLD roaming response frame may be set based on/using the value of the MLD roaming timer included in the MLD roaming request frame (e.g., to a changed value when the requested timer value is changed). For example, if the value of the MLD roaming timer requested by the STA is used as is and the value of the status code is set to a value indicating success/acceptance, the MLD roaming timer subfield may not be included in the MLD roaming response frame.

Additionally or alternatively, the MLD roaming timer information may include a value for each of one or more NAPs, or may include a value that is common to one or more NAPs. For example, a number of individual MLD roaming timer information corresponding to the number of NAPs may be included in the per-STA profile sub-element of the MLD roaming response frame. For example, a single MLD roaming timer information that is common to one or more NAPs may be included in the common information field of the MLD roaming response frame.

Additionally, the basic ML element may include a group ID.

As an example of the present disclosure, a group ID may be included in the common information field of a basic ML element as in Embodiment 1-3-1, and whether the group ID exists in the common information field may be indicated through the presence bitmap subfield of the basic ML element. Accordingly, the MLD roaming response frame may include information about AP(s) affiliated with the same AP group having the group ID indicated through the common information field.

As an example of the present disclosure, when an MLD roaming response frame including a group ID (i.e., when the group ID is included in the link information field) is transmitted as in Embodiment 1-3-2, the group ID may be included in the link information field of the basic ML element of the MLD roaming response frame.

Specifically, the link information field of the basic ML element may include one or more per-STA profile sub-elements, and the STA control field of each of the one or more per-STA profile sub-elements may include a link ID and a group ID (i.e., an ID of an AP group).

Information about one or more APs corresponding to one or more group IDs may be provided through one or more STA-specific profile sub-elements. However, when providing information about AP(s) having the same group ID, overhead may be greater than the method according to embodiment 1-5-1.

As another example of the present disclosure, the STA control field of each per-STA profile sub-element may include information indicating whether a group ID exists in each of one or more per-STA profile sub-elements (i.e., group ID presence information).

That is, through the group ID existence information of the STA control field included in the STA-per-profile sub-element, it may be indicated whether the ID (i.e., group ID) of the AP group to which the AP corresponding to the link ID included in the STA control field is affiliated exists in the per-STA profile sub-element. Here, the group ID may be included in the STA information field or the STA profile field of the per-STA profile sub-element.

Information about one or more APs corresponding to one or more group IDs may be provided via one or more per-STA profile sub-elements.

Additionally or alternatively, the method of embodiment 1-3-1 (i.e., the method in which the group ID is included in the common information field) and the method of embodiment 1-3-3 (i.e., information indicating whether the group ID exists in the STA control field) may be combined. If only information about APs corresponding to the same group ID is provided, the group ID does not need to be included in the STA-specific profile sub-element, thereby reducing overhead.

As an example of the present disclosure, when a unique ID is set within an AP group in the AP MLD as described in Embodiment 1-1-1, if the group ID is 0, the group ID may be omitted. That is, when the group ID does not exist, the AP that receives the MLD roaming request frame can implicitly determine that the request frame is a request for information about other APs regarding the group to which it belongs.

As another example of the present disclosure, if a group ID is included in the common information field, the STA may implicitly determine that the information included in the MLD roaming response frame is information about the AP(s) corresponding to the same group ID. Accordingly, the group ID presence field may not be included in the MLD roaming response frame.

The group key information of order 6 may be set to a value indicating group key information for NAPs. Since the group key may be different for each link, group key information for NAPs needs to be provided. For example, a field corresponding to the group key information may include a subfield indicating the length of a group key information subfield, and a subfield set to a value of the group key information. The group key information may include an MLO GTK (group temporal key) KDE (key data encapsulation) format, an MLO IGTK (integrity group temporal key) KDE, an MLO BIGTK (beacon integrity group temporal key) KDE format, etc., including a link identifier of the NAP.

The AID information in step 7 can manage AIDs for each group. Since the total AID space is limited, AIDs may be managed by AP group. That is, when roaming to another group, a separate AID may be assigned. However, when roaming to another group and assigning the same AID, or when the entire AID space is managed by the AP MLD as before, the AID information in step 7 may not exist.

The channel switching announcement element information and the extended channel switching announcement element information of sequences 8 and 9 may be omitted from the MLD roaming response frame when all APs with MLD-based roaming enabled operate on the same channel. When MLD-based roaming is performed on a different channel, the channel information may be provided through the (extended) channel switching announcement element. Additionally or alternatively, the (extended) channel switching announcement element may be included in the STA information/STA profile field of the basic ML element of sequence 5.

The TID-to-Link mapping information of order 10 may be used to map TIDs in advance through TID-to-Link mapping for a newly connected link. If TID-to-Link mapping is not performed separately, default mapping may be applied to the newly connected link. If the default mapping mode is applied, all TIDs may be mapped to links set up for both DL and UL, and all set up links may be enabled.

Additionally, the AP MLD may include the MLD roaming timer of the above-described reconfiguration ML element in the MLD roaming response frame. That is, the AP MLD may control the MLD-based roaming procedure, and thus can set/indicate the MLD roaming timer. For example, assume that the STA transmits an MLD roaming request frame that does not include the MLD roaming timer, or that the information about the MLD roaming timer transmitted by the STA is determined by the AP to be inappropriate. In this case, the AP MLD can transmit an MLD roaming response frame including information for setting the MLD roaming timer to the STA.

Here, the expiration of the MLD roaming timer may mean that the point in time when the STA no longer performs various operations with the OAP and performs various operations with the NAP has passed as the MLD-based roaming is completed. For example, assume that the STA transmits an MLD roaming request frame including a request to add a temporary link with the NAP. In this case, if the MLD roaming timer expires, the STA may disconnect from the OAP (i.e., "delete" or "temporarily delete") the link and perform a connection with the NAP.

If the MLD roaming timer is commonly applied to all APs, information about the MLD roaming timer may be included in the common information field of the reconfiguration/default ML element, as illustrated in (b) of FIG. 16. In addition, information indicating whether the MLD roaming timer exists in the common information field may be included in the presence bitmap subfield of the reconfiguration/default ML element.

### MLD Roaming Request/Response Frame Exchange Procedure

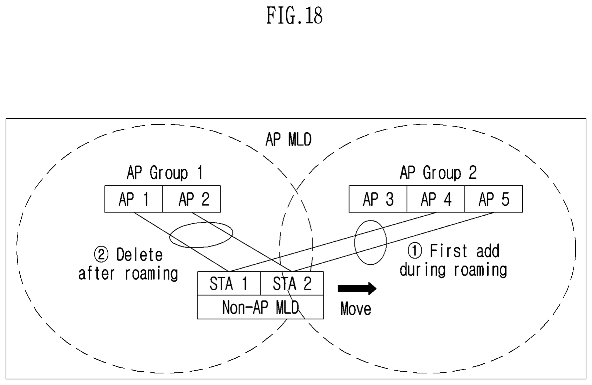

As an example of the present disclosure, FIG. 18 illustrates a procedure for performing MLD-based roaming. It is assumed that STA 1 affiliated with a non-AP MLD is currently connected to AP 1 of AP group 1, and STA 2 affiliated with a non-AP MLD is currently connected to AP 2 of AP group 1. Here, as STA 1 and STA 2 move from AP group 1 to AP group 2, STA 1 may perform a roaming procedure to AP 4 of AP group 1, and STA 2 may perform a roaming procedure to AP 5 of AP group 2.

STA 1 may exchange an MLD roaming request/response frame with AP 1 to temporarily connect to AP 4 while connected to AP 1 (i.e., to add a temporary link). Here, the MLD roaming request frame may include information requesting a temporary link connection with AP 4. Here, the MLD roaming request frame may include a link ID of AP 4 and a group ID of AP group 2 with which AP 4 is affiliated. Accordingly, AP 1 may transmit a basic ML element including information indicating that it approves the MLD-based roaming request and information about AP 4 to STA 1 through the MLD roaming response frame.

Similarly to the above-described method, STA 2 may exchange MLD roaming request/response frames with AP 2 to temporarily connect to AP 5 while connected to AP 2 (i.e., to add a temporary link). Here, the MLD roaming request frame may include information requesting a temporary link connection with AP 5. Here, the MLD roaming request frame may include a link ID of AP 5 and a group ID of AP group 2 with which AP 5 is affiliated. Accordingly, AP 2 may transmit a basic ML element including information indicating that it approves the MLD-based roaming request and information about AP 5 to STA 2 through the MLD roaming response frame.

When the above-described procedure is completed, STA 1 may be temporarily connected to AP 1 and AP 4, and STA 2 may be temporarily connected to AP 2 and AP 5. Accordingly, STA 1 may transmit and receive data to and from AP 1 and AP 4, and STA 2 may transmit and receive data to and from AP 2 and AP 5.

Then, STA 1 may perform a (temporary) connection deletion operation with AP 1, and STA 2 may perform a (temporary) connection deletion operation with AP 2. Accordingly, STA 1 may complete an ML-based roaming procedure to AP 4, and STA 2 may complete an ML-based roaming procedure to AP 5.

The above-described procedure relates to a procedure for an STA to temporarily add a link and delete a link with an OAP. The MLD roaming timer may be utilized in the procedure for temporarily adding and deleting a link.

For example, STA 1 and STA 2 may each transmit and receive MLD roaming request/response frames to and from AP 1 and AP 2, respectively. STA 1 and STA 2 may each request temporary link addition to AP 4 and AP 5, respectively, through the MLD roaming request frame. Here, as described above, an MLD roaming timer may be set through an MLD roaming response frame by a non-AP MLD or an AP MLD. After the MLD roaming response frame is successfully transmitted, the MLD roaming timer may operate. When the MLD roaming timer expires, the link between STA 1 and AP 1 may be deleted, and the link between STA 1 and AP 4 may be fully connected. In addition, when the MLD roaming timer expires, the link between STA 2 and AP 2 may be deleted, and the link between STA 2 and AP 5 may be fully connected.

Through the above-described procedure, each STA included in the non-AP MLD may simultaneously transmit and receive data with the previously connected AP and the AP with which it is attempting to roam while performing the MLD roaming procedure. This allows for a more efficient and seamless MLD-based roaming procedure.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless LAN system, the method comprising:
receiving, from a first access point (AP) affiliated with a first group, announcement information including first information related to whether addition of at least one link is supported for the first STA;
transmitting, to the first AP, a request frame including an link ID of a second AP affiliated with a second group; and
receiving, from the first AP, a response frame including the link ID of the second AP,
wherein the request frame includes second information requesting addition or deletion of a link between the first STA and the second AP.

2. The method of claim 1, wherein:
the announcement information is included in an MLD-based roaming element or an reduced neighbor report (RNR) element included in a management frame, and
the MLD-based roaming element or the RNR element includes a first subfield related to at least one group ID and a second subfield related to the first information.

3. The method of claim 1, wherein:
the request frame includes third information related to whether the addition or deletion of a link between the first STA and the second AP is a temporary link addition or deletion.

4. The method of claim 3, wherein:
the request frame includes a reconfiguration multi-link element, and
a common information field or STA control field of the reconfiguration multi-link element includes a third subfield related to the second information and a fourth subfield related to the third information.

5. The method of claim 3, wherein:
based on an addition of a link between the first STA and the second AP being requested through the third subfield and the fourth subfield, the link between the first STA and the second AP is connected while the link between the first STA and the first AP is connected.

6. The method of claim 5, wherein:
based on a roaming procedure to the second AP being completed, the link between the first STA and the first AP is deleted.

7. The method of claim 1, wherein:
each of the request frame and the response frame includes a group ID associated with the second group.

8. The method of claim 5, wherein:
the response frame includes fourth information related to a multi-link device (MLD) roaming timer, and
the link between the first STA and the first AP is deleted based on an expiration of the MLD roaming timer.

9. The method of claim 1, wherein:
the response frame includes a basic ML element, and
the basic ML element includes AID and traffic identifier-to-link mapping information for the first STA.

10. The method of claim 1, wherein:
based on the response frame including information indicating that roaming to the second AP is accepted, an association process with the second AP is initiated.

11. The method of claim 1, wherein:
each of the first group and the second group is mapped to a separate AP MLD.

12. The method of claim 1, wherein:
the first STA is affiliated with a non-AP MLD.

13. The method of claim 12, wherein:
while a roaming procedure of the first STA is being performed, a roaming procedure of the second STA affiliated with the non-AP MLD is being performed.

14. A first station (STA) operating in a wireless LAN system, the first STA comprising:
at least one transceiver; and
at least one processor coupled to the at least one transceiver,
wherein the at least one processor is configured to:
receive, from a first access point (AP) affiliated with a first group, announcement information including first information related to whether addition of at least one link is supported for the first STA, through the at least one transceiver;
transmit, to the first AP, a request frame including an link ID of a second AP affiliated with a second group, through the at least one transceiver; and
receive, from the first AP, a response frame including the link ID of the second AP, through the at least one transceiver, wherein the request frame includes second information requesting addition or deletion of a link between the first STA and the second AP.

15. A method performed by a first access point (AP) included in a first group in a wireless LAN system, the method comprising:
transmitting, to a first station (STA), announcement information including first information regarding whether an addition of at least one link is supported for the first STA;
receiving, from the first STA, a request frame including a link ID of a second AP affiliated with a second group; and
transmitting, to the first STA, a response frame including the link ID of the second AP,
wherein the request frame includes second information requesting addition or deletion of a link between the first STA and the second AP.

16. A first access point (AP) operating in a wireless LAN system, the first AP comprising:
at least one transceiver; and
at least one processor coupled to the at least one transceiver,
wherein the at least one processor is configured to:
transmit, to a first station (STA), announcement information including first information regarding whether an addition of at least one link is supported for the first STA, through the at least one transceiver;
receive, from the first STA, a request frame including a link ID of a second AP affiliated with a second group, through the at least one transceiver; and
transmit, to the first STA, a response frame including the link ID of the second AP, through the at least one transceiver, wherein the request frame includes second information requesting addition or deletion of a link between the first STA and the second AP.

17. A processing apparatus configured to control a first station (STA) in a wireless LAN system, the processing apparatus comprising:
at least one processor; and
at least one computer memory operably connected to the at least one processor and storing instructions for performing a method according to claim 1 based on being executed by the at least one processor.

18. At least one non-transitory computer-readable medium storing at least one instruction,
wherein the at least one command is executed by at least one processor to control a first station (STA) in a wireless LAN system to perform a method according to claim 1.
